# EUROPEAN PATENT APPLICATION

(11) **EP 4 779 287 A1**
(43) Date of publication of application: **22.07.2026**
(21) Application number: 25220003.5
(22) Date of filing: 02.12.2025
(51) Int. Cl.: G01M 17/007, G01M 17/04

(54) **INSPECTION SYSTEM, CONTROL DEVICE, AND INSPECTION METHOD**

(30) Priority: 17.01.2025 JP 2025006727
(71) Applicant: Toyota Jidosha Kabushiki Kaisha, Toyota-shi, Aichi-ken 471-8571 (JP)
(72) Inventor: CHIBA, Hiroya, Toyota-shi, 471-8571 (JP)
(74) Representative: TBK

(57) **Abstract**

An inspection system includes an inspection device and a control device. The inspection device inspects a vehicle and includes a first support body, a second support body, and an actuator. The first support body supports a first wheel of the vehicle. The second support body supports a second wheel of the vehicle. The actuator changes support body spacing between the first support body and the second support body. The control device controls the actuator, and acquires wheel spacing between the first wheel and the second wheel and adjusts the support body spacing in accordance with the wheel spacing before the vehicle arrives at the inspection device.

## Description

### CROSS REFERENCE TO RELATED APPLICATIONS

This application claims priority to Japanese Patent Application No. 2025-006727, filed January 17, 2025, the disclosure of which is incorporated by reference herein in its entirety.

### BACKGROUND

### FIELD

The present disclosure relates to an inspection system, a control device, and an inspection method of a vehicle.

A known inspection device includes a front-wheel roller that supports a front wheel of a vehicle and a rear-wheel roller that supports a rear wheel of the vehicle, and inspects the vehicle while the front-wheel roller supports the front wheel and the rear-wheel roller supports the rear wheel (for example, Japanese Patent Application Publication No. H10-260113).

In the inspection described above, before the vehicle is moved onto the rollers, roller spacing of the inspection device needs to be adjusted in accordance with wheel spacing of the vehicle. Therefore, the vehicle may require standby time until an end of the adjustment of the inspection device after arrival of the vehicle at the inspection device. Thereby, a technique to suppress occurrence of the standby time of the vehicle until the end of the adjustment of the inspection device is desired.

### SUMMARY

The present disclosure is achievable as the following aspects.
(1) According to a first aspect of the present disclosure, an inspection system is provided. The inspection system includes an inspection device and a control device. The inspection device inspects a vehicle and includes a first support body, a second support body, and an actuator. The first support body supports a first wheel of the vehicle. The second support body supports a second wheel of the vehicle. The actuator changes support body spacing between the first support body and the second support body. The control device controls the actuator, and acquires wheel spacing between the first wheel and the second wheel and adjusts the support body spacing in accordance with the wheel spacing before the vehicle arrives at the inspection device. According to the inspection system of this aspect, occurrence of standby time of the vehicle by the time the vehicle moves onto the first support body and the second support body after arrival at the inspection device can be suppressed.
(2) In the inspection system of the aforementioned aspect, the control device may cause the vehicle to run to the inspection device by unmanned driving.
   According to the inspection system of this aspect, the control device causes the vehicle to run to the inspection device, and therefore the vehicle to be inspected next by the inspection device can easily be identified.
(3) In the inspection system of the aforementioned aspect, the first support body may include a first roller rotatable while the first roller supports the first wheel, and the second support body may include a second roller rotatable while the second roller supports the second wheel.
   According to the inspection system of this aspect, at the inspection device in which the first roller and the second roller support the vehicle, occurrence of standby time of the vehicle can be suppressed.
(4) In the inspection system of the aforementioned aspect, the control device may adjust the support body spacing when the vehicle enters a predetermined first region.
   According to the inspection system of this aspect, the support body spacing can be adjusted at an appropriate timing.
(5) In the inspection system of the aforementioned aspect, the control device may adjust the support body spacing when the vehicle starts to run toward the inspection device.
   According to the inspection system of this aspect, the support body spacing can be adjusted at an appropriate timing.
(6) In the inspection system of the aforementioned aspect, the inspection device may inspect a plurality of vehicles in order at a predetermined period. The control device may adjust the support body spacing at a timing in accordance with the period.
   According to the inspection system of this aspect, the support body spacing can be adjusted at an appropriate timing.
(7) In the inspection system of the aforementioned aspect, the inspection device may inspect a plurality of vehicles in order. The control device may identify among the plurality of vehicles a preceding vehicle that is inspected by the inspection device first, and a target vehicle that is inspected by the inspection device next to the preceding vehicle, and adjust the support body spacing in accordance with the wheel spacing of the target vehicle after the preceding vehicle withdraws from the inspection device and before the target vehicle arrives at the inspection device.
   According to the inspection system of this aspect, adjustment of the support body spacing before the preceding vehicle withdraws from the inspection device can be suppressed.
(8) In the inspection system of the aforementioned aspect, the control device may adjust the support body spacing in accordance with the wheel spacing of the target vehicle when the preceding vehicle enters a predetermined second region outside of the inspection device.
   According to the inspection system of this aspect, the support body spacing can be adjusted after the preceding vehicle sufficiently separates from the inspection device.
(9) In the inspection system of the aforementioned aspect, when a third vehicle to be inspected by the inspection device between inspection of the preceding vehicle and inspection of the target vehicle arises after the preceding vehicle and the target vehicle are identified, the control device may adjust the support body spacing in accordance with the wheel spacing of the third vehicle after the preceding vehicle withdraws from the inspection device and before the third vehicle arrives at the inspection device.
   According to the inspection system of this aspect, adjustment of the support body spacing with erroneous spacing can be suppressed.
(10) According to a second aspect of the present disclosure, a control device is provided. The control device includes a storage unit and a control unit. The storage unit stores wheel spacing between a first wheel and a second wheel of a vehicle. The control unit controls an inspection device including a first support body, a second support body, and an actuator. The first support body supports the first wheel of the vehicle. The second support body supports the second wheel of the vehicle. The actuator changes support body spacing between the first support body and the second support body. The control unit adjusts the support body spacing in accordance with the wheel spacing before the vehicle arrives at the inspection device.
   According to the control device of this aspect, occurrence of standby time of the vehicle by the time the vehicle moves onto the first support body and the second support body after arrival at the inspection device can be suppressed.
(11) According to a third aspect of the present disclosure, an inspection method is provided. Th inspection method includes an inspection step and a preparation step. In the inspection step, a vehicle is inspected by using an inspection device. The inspection device includes a first support body and a second support body. The first support body supports a first wheel of the vehicle. The second support body supports a second wheel of the vehicle. In the preparation step, wheel spacing between the first wheel and the second wheel is acquired, and support body spacing between the first support body and the second support body is adjusted in accordance with the wheel spacing before the vehicle arrives at the inspection device.

According to the inspection method of this aspect, occurrence of standby time of the vehicle by the time the vehicle moves onto the first support body and the second support body after arrival at the inspection device can be suppressed.

The present disclosure can be implemented in various aspects other than the inspection system, the control device, and the inspection method. For example, the present disclosure can be implemented in aspects, such as a computer program, a computer program product, and a recording medium recording a computer program.

### BRIEF DESCRIPTION OF THE DRAWINGS

Fig. 1 is an explanatory diagram illustrating a configuration of an inspection system of a first embodiment;
Fig. 2 is an explanatory diagram illustrating a configuration of a vehicle of the first embodiment;
Fig. 3 is an explanatory diagram illustrating a configuration of a server device of the first embodiment;
Fig. 4 is an explanatory diagram illustrating configurations of an inspection device and an inspection control device of the first embodiment;
Fig. 5 is an explanatory diagram illustrating a vehicle running in a factory by remote control;
Fig. 6 is a flowchart illustrating a procedure for running control of the vehicle of the first embodiment;
Fig. 7 is a flowchart illustrating a procedure for operation control of the inspection device of the first embodiment;
Fig. 8 is an explanatory diagram illustrating the inspection device of the first embodiment being adjusted;
Fig. 9 is an explanatory diagram illustrating an inspection device of a second embodiment being adjusted;
Fig. 10 is an explanatory diagram illustrating an inspection device of a third embodiment being adjusted;
Fig. 11 is an explanatory diagram illustrating a configuration of a vehicle of a fourth embodiment;
Fig. 12 is an explanatory diagram illustrating a configuration of a server device of the fourth embodiment;
Fig. 13 is a flowchart illustrating a procedure for running control of the vehicle of the fourth embodiment; and
Fig. 14 is an explanatory diagram illustrating an inspection device of a fifth embodiment being adjusted.

### DETAILED DESCRIPTION

### A. First Embodiment:

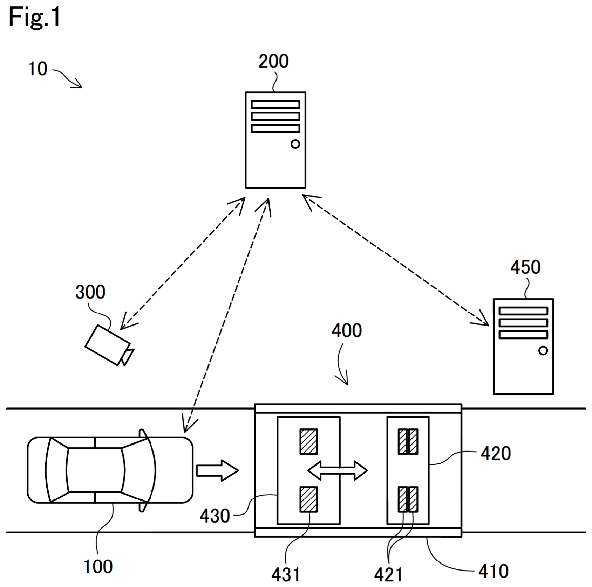

Fig. 1 is an explanatory diagram illustrating a configuration of an inspection system 10 of a first embodiment. The inspection system 10 includes at least one vehicle 100, a server device 200, at least one external sensor 300, an inspection device 400, and an inspection control device 450. In this embodiment, the inspection system 10 is used in a factory FC where the vehicle 100 is produced. However, the inspection system 10 may be used in, rather than the factory FC where the vehicle 100 is produced, a factory where the vehicle 100 is repaired or a factory where the vehicle 100 is maintained, for example. Note that in this embodiment the server device 200 corresponds to a "control device" of the present disclosure.

In this embodiment, the vehicle 100 is a four-wheeled electric vehicle (BEV: battery electric vehicle). The vehicle 100 may be a passenger car, or may be a bus, a truck, or the like. A drive system of the vehicle 100 may be front-wheel drive, or may be rear-wheel drive or four-wheel drive. Note that the vehicle 100 is not limited to an electric vehicle, but may be, for example, a gasoline-powered vehicle, a hybrid vehicle, or a fuel-cell vehicle. The vehicle 100 is not limited to a four-wheeled vehicle, but may be, for example, a three-wheeled vehicle or a six-wheeled vehicle.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

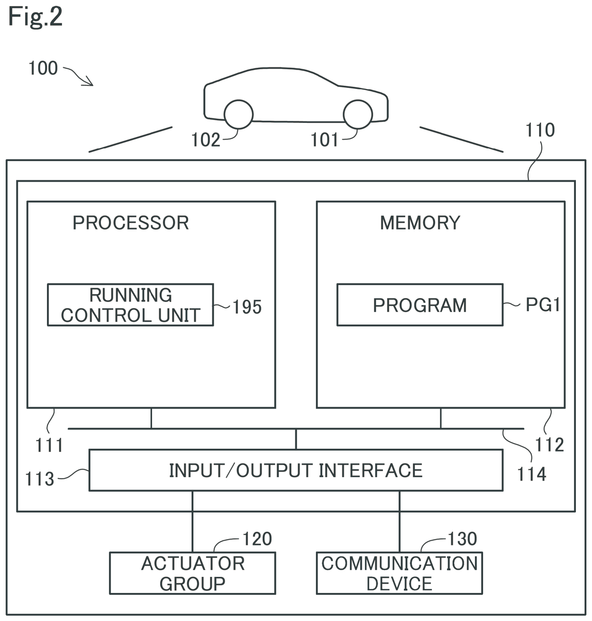

Fig. 2 is an explanatory diagram illustrating a configuration of the vehicle 100. In this embodiment, the vehicle 100 is runnable by remote control. The vehicle 100 includes a front wheel 101 including a left-and-right pair of wheels and a rear wheel 102 including a left-and-right pair of wheels. The vehicle 100 includes a vehicle control device 110 that controls each unit of the vehicle 100, an actuator group 120 that performs driving under control of the vehicle control device 110, and a communication device 130 to communicate with a device outside of the vehicle 100. The actuator group 120 includes at least one actuator. In this embodiment, the actuator group 120 includes an actuator of a driving device that generates propulsion force of the vehicle 100, an actuator of a steering device that changes a traveling direction of the vehicle 100, and an actuator of a braking device that generates braking force of the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The communication device 130 communicates with the server device 200 by wireless communication.

The processor 111 executes a computer program PG1 stored in the memory 112 in advance, thus functioning as a running control unit 195. The running control unit 195 controls running of the vehicle 100. When an occupant rides on the vehicle 100, the running control unit 195 can control the actuator group 120 in accordance with operation by the occupant to cause the vehicle 100 to run. Regardless of whether the occupant rides on the vehicle 100, the running control unit 195 can use a running control signal received from the server device 200 to control the actuator group 120, thereby causing the vehicle 100 to run. The running control signal is a control signal to control running of the vehicle 100. In this embodiment, the running control signal includes, as parameters, acceleration and a steering angle of the vehicle 100. Note that the running control signal may include, alternative to or in addition to the acceleration of the vehicle 100, speed of the vehicle 100 as a parameter.

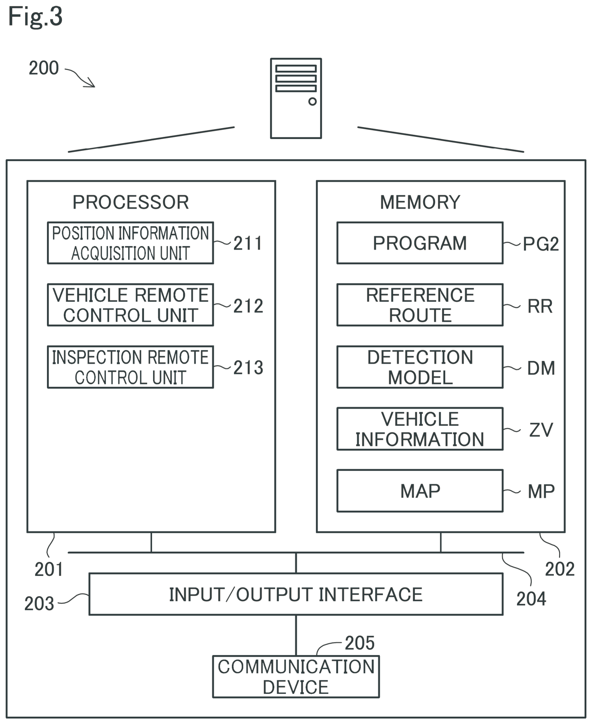

Fig. 3 is an explanatory diagram illustrating a configuration of the server device 200. The server device 200 is located outside of the vehicle 100. The server device 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with a device outside of the server device 200 is coupled to the input/output interface 203. In this embodiment, the communication device 205 communicates with the vehicle 100 by wireless communication and communicates with the external sensor 300 and the inspection control device 450 by wired or wireless communication.

The processor 201 executes a computer program PG2 stored in the memory 202 in advance, thus functioning as a position information acquisition unit 211, a vehicle remote control unit 212, and an inspection remote control unit 213. The position information acquisition unit 211 uses the external sensor 300 to acquire position information of the vehicle 100. As illustrated in Fig. 1, the external sensor 300 is located outside of the vehicle 100. In this embodiment, the external sensor 300 is a camera. The external sensor 300 includes a communication device (not illustrated) and communicates with the server device 200 by wired or wireless communication.

The vehicle remote control unit 212 remotely controls the vehicle 100. In this embodiment, the vehicle remote control unit 212 generates the running control signal that is a control signal to control running of the vehicle 100, and transmits the running control signal to the vehicle 100. Thereby, the vehicle remote control unit 212 causes the vehicle 100 to run by remote control.

The inspection remote control unit 213 remotely controls the inspection device 400. In this embodiment, the inspection remote control unit 213 generates an operation control signal that is a control signal to control operation of the inspection device 400, and transmits the operation control signal to the inspection device 400. Thereby, the inspection remote control unit 213 causes the inspection device 400 to operate by remote control.

The memory 202 stores vehicle information ZV on a dimension of the vehicle 100 in advance. The vehicle information ZV includes information on wheel spacing of the vehicle 100. In this embodiment, the vehicle information ZV includes, as the information on the wheel spacing of the vehicle 100, information on a length of a wheelbase of the vehicle 100. Here, the wheelbase means a distance between a rotation axis of the front wheel 101 and a rotation axis of the rear wheel 102. In this embodiment, the vehicle information ZV is used in remote control of the vehicle 100 by the vehicle remote control unit 212 and in remote control of the inspection device 400 by the inspection remote control unit 213. For example, turning radius difference of the vehicle 100 while taking a curve varies in accordance with the length of the wheelbase of the vehicle 100. Therefore, the vehicle remote control unit 212 uses the vehicle information ZV to remotely control the vehicle 100, and thereby executes running of the vehicle 100 in accordance with the length of the wheelbase of the vehicle 100. In this embodiment, the inspection device 400 needs to be adjusted in accordance with the length of the wheelbase of the vehicle 100. Therefore, prior to the inspection of the vehicle 100 by the inspection device 400, the inspection remote control unit 213 uses the vehicle information ZV to remotely control the inspection device 400, and thereby executes adjustment of the inspection device 400 in accordance with the length of the wheelbase of the vehicle 100. Note that in the present disclosure the memory 202 may be referred to as a storage unit, and the processor 201 may be referred to as a control unit.

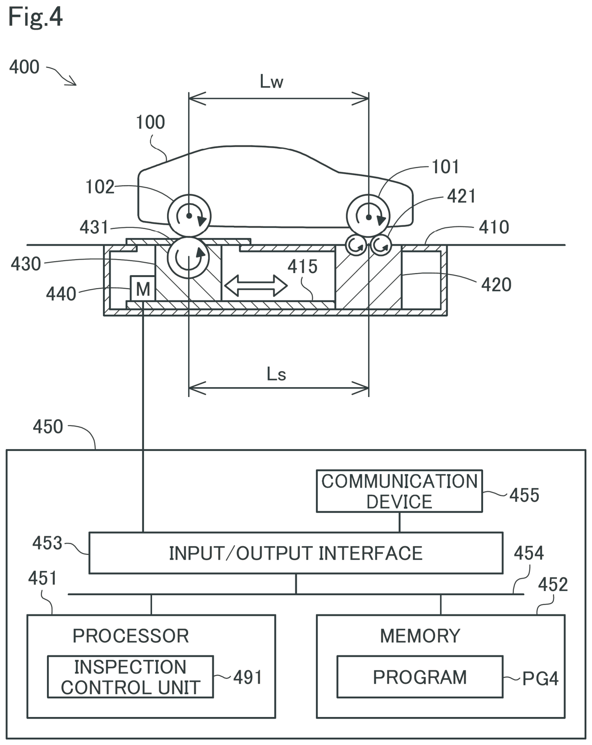

Fig. 4 is an explanatory diagram illustrating configurations of the inspection device 400 and the inspection control device 450. The inspection device 400 is used to inspect the vehicle 100. The inspection device 400 includes a stage 410, a first support body 420, a second support body 430, and an actuator 440. The actuator 440 changes spacing between the first support body 420 and the second support body 430.

The stage 410 is installed at a floor of the factory FC. The first support body 420 and the second support body 430 are provided to the stage 410. The first support body 420 supports a first wheel of the vehicle 100 and the second support body 430 supports a second wheel of the vehicle 100. In this embodiment, the first wheel is the front wheel 101 and the second wheel is the rear wheel 102. That is, in this embodiment, the first support body 420 supports the front wheel 101 and the second support body 430 supports the rear wheel 102. In the following description, the first support body 420 that supports the front wheel 101 is referred to as a front-wheel support body 420, and the second support body 430 that supports the rear wheel 102 is referred to as a rear-wheel support body 430.

In this embodiment, the front-wheel support body 420 includes four front-wheel rollers 421 that are rotatable while supporting the front wheel 101. The front-wheel support body 420 supports one front wheel 101 by two front-wheel rollers 421 aligned in a front-rear direction. The front-wheel rollers 421 are rotatable by a motor (not illustrated) while supporting the front wheel 100. In this embodiment, the rear-wheel support body 430 includes two rear-wheel rollers 431 that are rotatable while supporting the rear wheel 102. The rear-wheel support body 430 supports one rear wheel 102 by one rear-wheel roller 431. The rear-wheel roller 431 has a diameter larger than the front-wheel roller 421. The rear-wheel rollers 431 are rotatable by a motor (not illustrated) while supporting the rear wheel 102. In this embodiment, the inspection device 400 includes a rotation speed sensor (not illustrated) that detects rotation speed of the rollers 421 and 431, and a braking force sensor (not illustrated) that detects braking force of the vehicle 100. Note that the front-wheel roller 421 may be referred to as a first roller and the rear-wheel roller 431 may be referred to as a second roller.

The actuator 440 moves at least one of the front-wheel support body 420 and the rear-wheel support body 430 to change support body spacing that is spacing between the front-wheel support body 420 and the rear-wheel support body 430. In this embodiment, the actuator 440 moves the rear-wheel support body 430 along a guide rail 415 provided to the stage 410 to change the support body spacing. However, the actuator 440 may move the front-wheel support body 420 to change the support body spacing, or may move both of the front-wheel support body 420 and the rear-wheel support body 430 to change the support body spacing.

In this embodiment, the inspection device 400 includes a function as a drum tester and a function as a brake tester. The drum tester causes the rollers 421 and 431 to be rotated by driving rotation of the wheels 101 and 102 to inspect a driving device, a speedometer, and/or the like of the vehicle 100. The brake tester causes the wheels 101 and 102 to be rotated by driving rotation of the rollers 421 and 431 to inspect a braking device and/or the like of the vehicle 100. However, the inspection device 400 may not include one of the functions as the drum tester and as the brake tester. When the inspection device 400 does not include the function as the brake tester, the inspection device 400 may not include the motor that rotates the rollers 421 and 431 and the braking force sensor.

The inspection control device 450 controls each unit of the inspection device 400. The inspection control device 450 includes a computer including a processor 451, a memory 452, an input/output interface 453, and an internal bus 454. The processor 451, the memory 452, and the input/output interface 453 are coupled to one another via the internal bus 454 in a bidirectionally communicable manner. The actuator 440, the motor that rotates the front-wheel roller 421, the motor that rotates the rear-wheel roller 431, various sensors of the inspection device 400, and a communication device 455 to communicate with a device other than the inspection device 400 are coupled to the input/output interface 453. In this embodiment, the communication device 455 communicates with the server device 200 by wireless or wired communication.

The processor 451 executes a computer program PG4 stored in the memory 452 in advance, thus functioning as an inspection control unit 491. The inspection control unit 491 controls each unit of the inspection device 400 in accordance with the operation control signal received from the server device 200. The inspection control unit 491 controls, before the vehicle 100 enters onto the stage 410, the actuator 440 in accordance with the operation control signal received from the server device 200 to adjust the spacing between the front-wheel support body 420 and the rear-wheel support body 430. The operation control signal includes, as a parameter, a length Lw of the wheelbase of the vehicle 100. The inspection control unit 491 adjusts the spacing between the front-wheel support body 420 and the rear-wheel support body 430 in such a manner that each front wheel 101 of the vehicle 100 is supported by two front-wheel rollers 421 and each rear wheel 102 is supported by one rear-wheel roller 431.

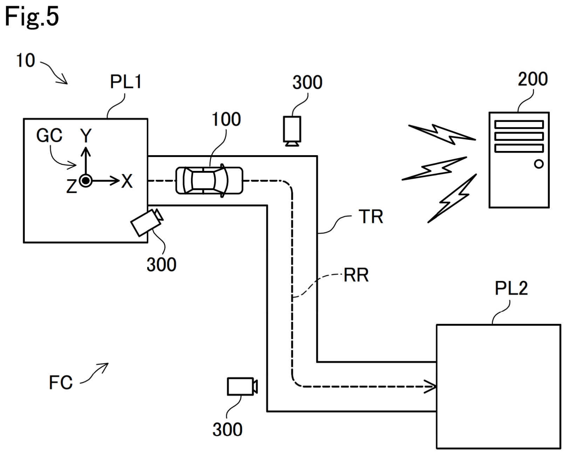

Fig. 5 is an explanatory diagram illustrating the vehicle 100 running in the factory FC by remote control. In this embodiment, the inspection system 10 is used in the factory FC where the vehicle 100 is produced. A reference coordinate system in the factory FC is a global coordinate system GC, and any position in the factory FC can be represented by X, Y, and Z coordinates in the global coordinate system GC. The factory FC includes a first place PL1 and a second place PL2. The first place PL1 and the second place PL2 are connected to one another through a track TR on which the vehicle 100 is runnable. In the factory FC, a plurality of external sensors 300 is disposed along the track TR. A position and a direction of each external sensor 300 in the factory FC is adjusted in advance.

In this embodiment, the first place PL1 is a place where the vehicle 100 is assembled. When the vehicle 100 is assembled in the first place PL1, at least the front wheel 101, the rear wheel 102, the vehicle control device 110, the actuator group 120, and the communication device 130 are attached to the vehicle 100. Therefore, the vehicle 100 is runnable by remote control when the vehicle 100 is assembled in the first place PL1. The vehicle 100 assembled in the first place PL1 is remotely controlled by the server device 200 to move from the first place PL1 to the second place PL2 through the track TR. The server device 200 acquires an identification number of the vehicle 100 that is a remote control target, prior to start of the remote control of the vehicle 100. For example, the vehicle 100 to which a two-dimensional code recording the identification number of the vehicle 100 is attached is disposed at a given start position. Then, when a worker in the factory FC reads the two-dimensional code attached to the vehicle 100 by using a reading device, the identification number of the vehicle 100 is transmitted from the reading device to the server device 200. The second place PL2 is a place where the vehicle 100 is inspected. The inspection device 400 is disposed in the second place PL2. The vehicle 100 that has passed the inspection in the second place PL2 is then shipped from the factory FC.

In this embodiment, the server device 200 can remotely control a plurality of vehicles 100 parallelly at the same time to cause the plurality of vehicles 100 to run parallelly at the same time. When the server device 200 causes the plurality of vehicles 100 to run parallelly at the same time, the server device 200 transmits to each vehicle 100 the running control signal in accordance with a reference route RR of each vehicle 100 and a current position and direction of each vehicle 100.

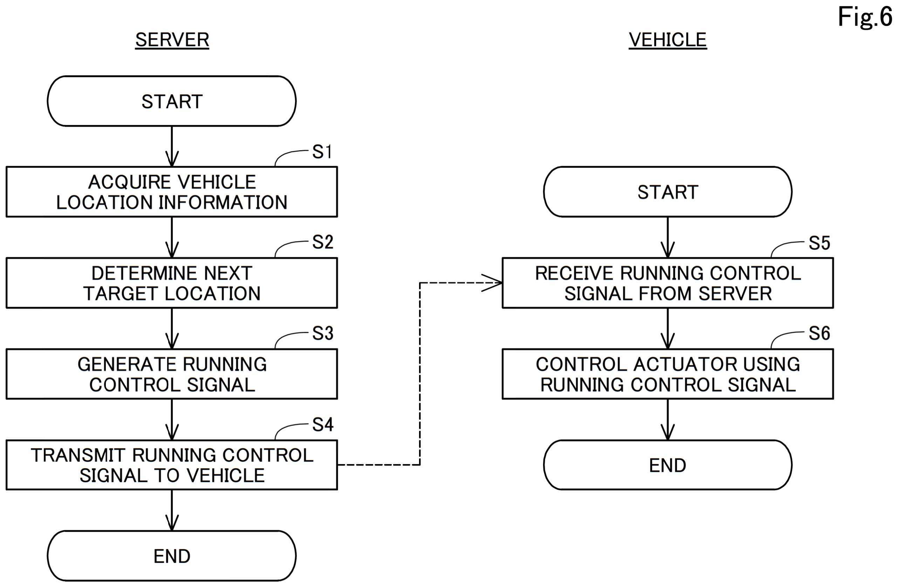

Fig. 6 is a flowchart showing a processing procedure for running control of the vehicle 100 in the first embodiment. In step S1, the processor 201 of the server device 200 acquires vehicle location information using detection result output from the external sensor 300. The external sensor 300 is located outside the vehicle 100. The vehicle location information is locational information as a basis for generating a running control signal. In the present embodiment, the vehicle location information includes the location and orientation of the vehicle 100 in the reference coordinate system of the factory FC. In the present embodiment, the reference coordinate system of the factory FC is the global coordinate system GC and a location in the factory FC can be expressed by X, Y, and Z coordinates in the global coordinate system GC. In the present embodiment, the external sensor 300 is a camera that is disposed in the factory FC and outputs a captured image as detection result. In step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the inspection system 10 or outside the inspection system 10. The detection model DM is stored in advance in the memory 202 of the server device 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server device 200 determines a target location to which the vehicle 100 is to move next. In the present embodiment, the target location is expressed by X, Y, and Z coordinates in the global coordinate system GC. The memory 202 of the server device 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The server device 200 determines the target location on the reference route RR ahead of a current location of the vehicle 100.

In step S3, the processor 201 of the server device 200 generates a running control signal for causing the vehicle 100 to run toward the determined target location. In the present embodiment, the running control signal includes an acceleration and a steering angle of the vehicle 100 as parameters. the processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the processor 201 of the server device 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle control device 110 receives the running control signal transmitted from the server device 200. In step S6, the processor 111 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the inspection system 10 in the present embodiment, it becomes possible to move the vehicle 100 without using a transport unit such as a crane or a conveyor.

As illustrated in Fig. 1, the vehicle remote control unit 212 of the server device 200 remotely controls the vehicle 100 to cause the vehicle 100 to run onto the inspection device 400 and stop on the inspection device 400. Here, in order for the inspection device 400 to inspect the vehicle 100, as illustrated in Fig. 4, each front wheel 101 of the vehicle 100 needs to be supported by two front-wheel rollers 421 of the inspection device 400, and each rear wheel 102 of the vehicle 100 needs to be supported by one rear-wheel roller 431 of the inspection device 400. Therefore, it is necessary to adjust the spacing between the front-wheel support body 420 including the front-wheel roller 421 and the rear-wheel support body 430 including the rear-wheel roller 431 in accordance with the length of the wheelbase of the vehicle 100 before the vehicle 100 enters onto the inspection device 400. In the following description, the adjustment of the spacing between the front-wheel support body 420 and the rear-wheel support body 430 is referred to as adjustment of the inspection device 400. When the adjustment of the inspection device 400 does not end when the vehicle 100 arrives at an entrance to the inspection device 400, the vehicle 100 needs to standby for entry to the inspection device 400 until the adjustment of the inspection device 400 ends. Therefore, in this embodiment, in order to suppress occurrence of the standby time of the vehicle 100, operation of the inspection device 400 is controlled as follows.

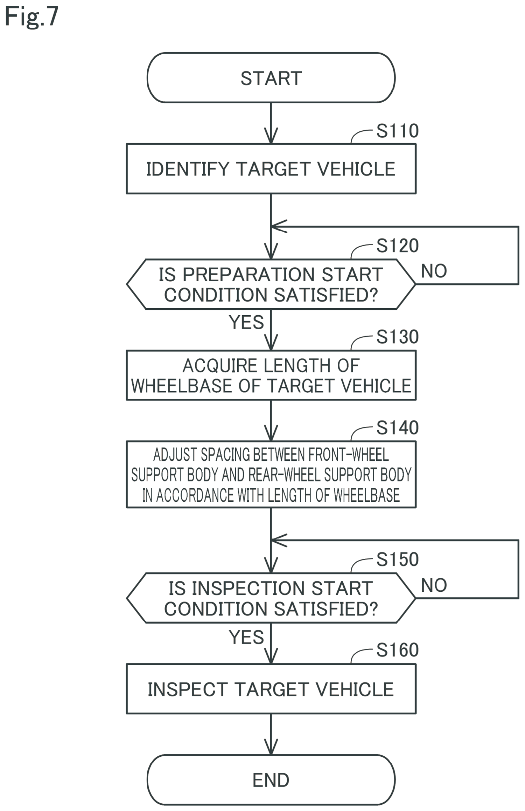

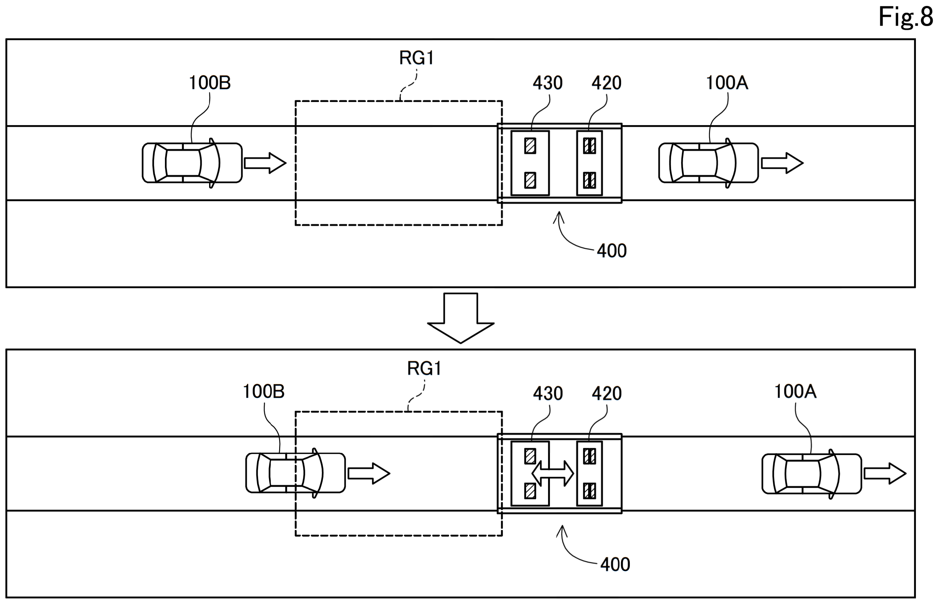

Fig. 7 is a flowchart illustrating a procedure for operation control of the inspection device 400. Fig. 8 is an explanatory diagram illustrating the inspection device 400 being adjusted. In this embodiment, the processor 201 of the server device 200 repetitively executes the operation control of the inspection device 400.

As illustrated in Fig. 7, at Step S110, the processor 201 of the server device 200 identifies the vehicle 100 to be inspected next by the inspection device 400. In the following description, the vehicle 100 to be inspected next by the inspection device 400 is referred to as a target vehicle. In this embodiment, the processor 201 determines the vehicle 100 to be caused to enter the inspection device 400 next. Therefore, the processor 201 identifies as the target vehicle the vehicle 100 determined to be caused to enter the inspection device 400 next.

At Step S120, the processor 201 of the server device 200 determines whether a predetermined preparation start condition is satisfied. In this embodiment, the preparation start condition includes the following Condition A and Condition B. The processor 201 determines that the preparation start condition is satisfied when both of Condition A and Condition B are satisfied.
- Condition A: The target vehicle has entered a predetermined first region RG1 (see Fig. 8).
- Condition B: A preceding vehicle has withdrawn from the inspection device 400.
Here, the preceding vehicle means the vehicle 100 that is inspected by the inspection device 400 one before the target vehicle. The preceding vehicle is identified by the processor 201 in the last operation control. Note that when the preceding vehicle is absent, for example, in first inspection by the inspection device 400, the preparation start condition may not include Condition B.

As illustrated in Fig. 8, the first region RG1 is provided to include a running route of the target vehicle on a near side of the inspection device 400. The first region RF1 is preferably provided to have a range that allows the target vehicle that has entered the first region RG1 not to require standby by deceleration or stopping until the adjustment of the inspection device 400 ends. In this embodiment, the processor 201 of the server device 200 includes the vehicle position information of the target vehicle. In addition, the memory 202 of the server device 200 stores in advance a map MP indicating a range of the first region RG1. Therefore, the processor 201 can use the vehicle position information of the target vehicle and the map MP to determine whether Condition A is satisfied. Moreover, in this embodiment, the processor 201 can use the external sensor 300 provided around the inspection device 400 to determine whether Condition B is satisfied.

As illustrated in Fig. 7, at Step S120, if the preparation start condition is determined not to be satisfied, the processor 201 of the server device 200 executes the processing of Step S120 again after given time has passed. At Step S120, if the preparation start condition is determined to be satisfied, at Step S130, the server device 200 acquires the length of the wheelbase of the target vehicle. In this embodiment, the memory 202 of the server device 200 stores the vehicle information ZV for each vehicle 100 in such a manner as to be associated with the identification information of the vehicle 100. The processor 201 refers to the vehicle information ZV stored in the memory 202 to acquire the length of the wheelbase of the target vehicle.

At Step S140, the processor 201 of the server device 200 adjusts the support body spacing that is the spacing between the front-wheel support body 420 and the rear-wheel support body 430 of the inspection device 400 in accordance with the length of the wheelbase of the target vehicle. In this embodiment, the processor 201 remotely controls the actuator 440 of the inspection device 400 to adjust the support body spacing in such a manner that spacing Ls between a center position of the front-wheel roller 421 and a center position of the rear-wheel roller 431 matches the length Lw of the wheelbase of the target vehicle. The processor 201 proceeds the processing to Step S150 after the adjustment of the support body spacing ends.

At Step S150, the processor 201 of the server device 200 determines whether a predetermined inspection start condition is satisfied. In this embodiment, the inspection start condition includes that the target vehicle has stopped on the inspection device 400. The processor 201 can use the external sensor 300 provided around the inspection device 400 to determine whether the target vehicle has stopped on the inspection device 400.

At Step S150, if the inspection start condition is determined not to be satisfied, the processor 201 of the server device 200 executes the processing of Step S150 again after given time has passed. At Step S150, if the inspection start condition is determined to be satisfied, at Step S160, the processor 201 executes inspection of the target vehicle by using the inspection device 400.

Then, the processor 201 of the server device 200 ends the operation control of the inspection device 400. The processor 201 starts the operation control again after given time has passed. In the next operation control, the vehicle 100 to be inspected by the inspection device 400 next to the current target vehicle is identified as a new target vehicle. The current target vehicle becomes the preceding vehicle in the next operation control.

Note that in the present disclosure the above-described method executed through the operation control of the inspection device 400 may be referred to as an inspection method. The steps from Step S110 to Step S140 may be referred to as a preparation step, and the steps from Step S150 to Step S160 may be referred to as an inspection step.

Fig. 8 is the explanatory diagram illustrating the inspection device 400 being adjusted. Fig. 8 illustrates two vehicles 100A and 100B. The vehicle 100A is the preceding vehicle and the vehicle 100B is the target vehicle. As illustrated in the upper part of Fig. 8, the server device 200 causes the target vehicle 100B to approach the inspection device 400 while the inspection device 400 inspects the preceding vehicle 100A. However, the server device 200 may start to cause the target vehicle 100B to approach the inspection device 400 after the inspection device 400 ends the inspection of the preceding vehicle 100A. After the inspection device 400 ends the inspection of the preceding vehicle 100A, the server device 200 causes the preceding vehicle 100A to withdraw from the inspection device 400.

As illustrated in the lower part of Fig. 8, when the server device 200 detects that the target vehicle 100B approaching the inspection device 400 enters the first region RG1, the server device 200 starts the adjustment of the inspection device 400 in accordance with the length of the wheelbase of the target vehicle 100B. When the wheelbase of the target vehicle 100B is shorter than the wheelbase of the preceding vehicle 100A, the support body spacing of the inspection device 400 is reduced. When the wheelbase of the target vehicle 100B is longer than the wheelbase of the preceding vehicle 100A, the support body spacing of the inspection device 400 is increased. When the wheelbase of the target vehicle 100B is the same as the wheelbase of the preceding vehicle 100A, the support body spacing of the inspection device 400 remains unchanged. Time required from a start to an end of the adjustment of the inspection device 400 is shorter than time required from entry of the target vehicle 100B into the first region RG1 to arrival at the entrance to the inspection device 400 by normal running. The normal running as used herein is running without unnecessary deceleration or stopping. Therefore, the adjustment of the inspection device 400 has ended when the target vehicle 100B arrives at the entrance to the inspection device 400. Accordingly, the target vehicle 100B can enter onto the inspection device 400 without stopping at the entrance to the inspection device 400.

According to the inspection system 10 of this embodiment described above, the server device 200 adjusts the inspection device 400 in accordance with the length of the wheelbase of the target vehicle before the target vehicle arrives at the entrance to the inspection device 400. Therefore, standby time of the target vehicle from the arrival of the target vehicle at the entrance to the inspection device 400 until the end of the adjustment of the inspection device 400 can be shortened. Particularly, in this embodiment, the inspection device 400 is adjusted in such a manner that the adjustment of the inspection device 400 ends before the target vehicle arrives at the entrance to the inspection device 400. Therefore, standby time of the target vehicle from the arrival of the target vehicle at the entrance to the inspection device 400 until the end of the adjustment of the inspection device 400 can be zero.

Moreover, in this embodiment, the server device 200 remotely controls the plurality of vehicles 100 to be inspected by the inspection device 400 in such a manner that the plurality of vehicles 100 enters onto the inspection device 400 in an order of inspection. Therefore, the server device 200 can easily identify the target vehicle among the plurality of vehicles 100. Moreover, in this embodiment, it can be suppressed that the vehicle 100 other than the target vehicle among the plurality of vehicles 100 enters the inspection device 400.

Moreover, in this embodiment, the preparation start condition to start the adjustment of the inspection device 400 includes that the target vehicle has entered the first region RG1. Therefore, the adjustment of the inspection device 400 can be started at an appropriate timing.

Moreover, in this embodiment, the preparation start condition to start the adjustment of the inspection device 400 includes that the preceding vehicle has withdrawn from the inspection device 400. Therefore, it can be suppressed that the adjustment of the inspection device 400 is started at an inappropriate timing at which the preceding vehicle is located on the inspection device 400.

### B. Second Embodiment:

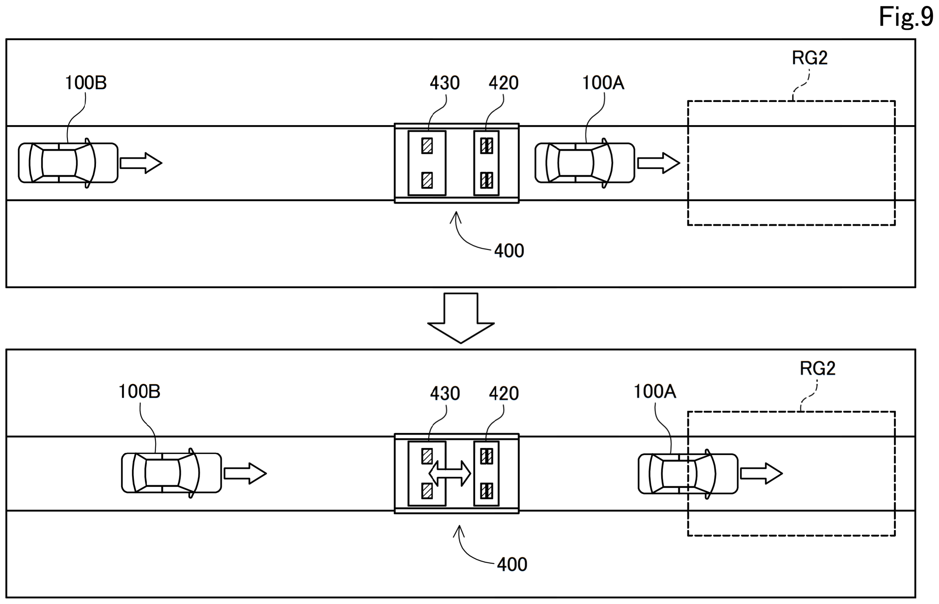

Fig. 9 is an explanatory diagram illustrating the inspection device 400 being adjusted in the inspection system 10 of a second embodiment. The second embodiment is different from the first embodiment in that the adjustment of the inspection device 400 is not started based on the position of the target vehicle, but is started based on the position of the preceding vehicle. Other configurations are the same as those of the first embodiment unless otherwise stated.

Fig. 9 illustrates the two vehicles 100A and 100B. The vehicle 100A is the preceding vehicle and the vehicle 100B is the target vehicle. In this embodiment, if the following preparation start condition is determined to be satisfied at Step S120 of the operation control illustrated in Fig. 7, the server device 200 adjusts the spacing between the front-wheel support body 420 and the rear-wheel support body 430 in accordance with the length of the wheelbase of the target vehicle. The preparation start condition includes the following Condition C instead of Conditions A and B.
- Condition C: The preceding vehicle has entered a second region RG2.

As illustrated in Fig. 9, the second region RG2 is provided outside of the inspection device 400. More specifically, the second region RG2 is provided at a location separate from the inspection device 400 and is provided to include the running route on a farther side of the inspection device 400. In this embodiment, the memory 202 of the server device 200 stores in advance the map MP indicating a range of the second region RG2.

According to the inspection system 10 of this embodiment described above, the server device 200 starts the adjustment of the inspection device 400 in accordance with the length of the wheelbase of the target vehicle 100B when it is detected that the preceding vehicle 100A has entered the second region RG2 outside of the inspection device 400. Therefore, the adjustment of the inspection device 400 in accordance with the length of the wheelbase of the target vehicle 100B can be started at an appropriate timing. In addition, in this embodiment, it can effectively be suppressed that the adjustment of the inspection device 400 is started while the preceding vehicle 100A is located on the inspection device 400.

### C. Third Embodiment:

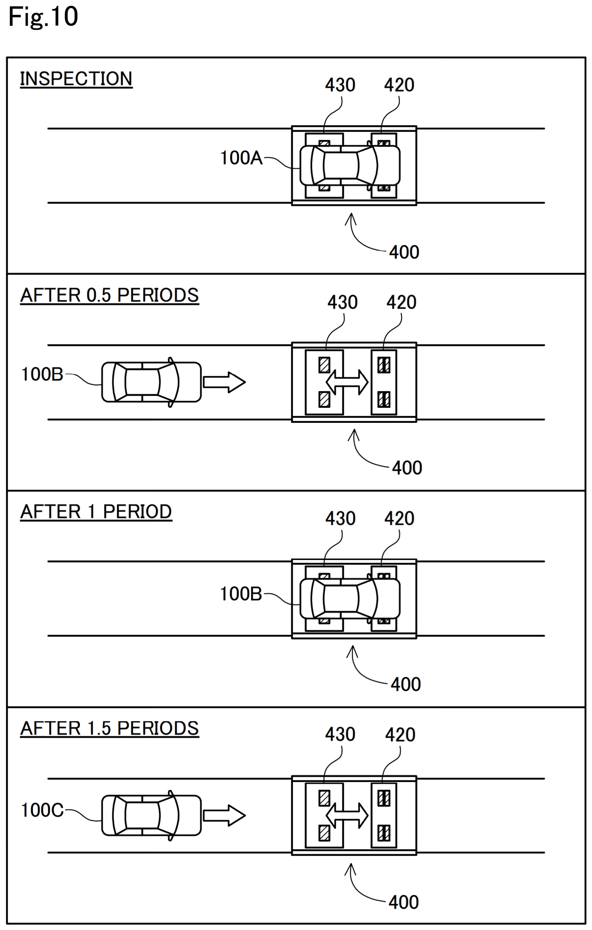

Fig. 10 is an explanatory diagram illustrating the inspection device 400 being adjusted in the inspection system 10 of a third embodiment. The third embodiment is different from the first embodiment in that the adjustment of the inspection device 400 is not started based on the position of the target vehicle, but is started at a predetermined period. Other configurations are the same as those of the first embodiment unless otherwise stated.

In this embodiment, the server device 200 causes respective ones of a plurality of vehicles 100A to 100C to run by remote control in such a manner that the vehicles 100A to 100C arrive at the entrance to the inspection device 400 at a predetermined period. The server device 200 executes inspection of each of the vehicles 100Ato 100C by the inspection device 400 at a period in accordance with the above-described period. In this embodiment, if the following preparation start condition is determined to be satisfied at Step S120 of the operation control illustrated in Fig. 7, the adjustment of the inspection device 400 in accordance with the length of the wheelbase of the target vehicle is started. The preparation start condition includes the following Condition D instead of Conditions A and B.
- Condition D: Predetermined time has passed since a start timing of the last adjustment of the inspection device 400.

As illustrated in Fig. 10, for example, the adjustment of the inspection device 400 in accordance with the length of the wheelbase of the target vehicle 100B is started after 0.5 periods from a start of inspection of the preceding vehicle 100A that is inspected by the inspection device 400 one before the target vehicle 100B. At the start timing of the adjustment of the inspection device 400 in accordance with the length of the wheelbase of the target vehicle 100B, the preceding vehicle 100A has already withdrawn from the inspection device 400. After one period from the start of the inspection of the preceding vehicle 100A, inspection of the target vehicle 100B is started. After 1.5 periods from the start of the inspection of the preceding vehicle 100A, the adjustment of the inspection device 400 in accordance with the length of the wheelbase of the subsequent vehicle 100C that is inspected by the inspection device 400 one after the target vehicle 100B is started. At the start timing of the adjustment of the inspection device 400 in accordance with the length of the wheelbase of the subsequent vehicle 100C, the target vehicle 100B has already withdrawn from the inspection device 400. In this embodiment, when arrival time of each of the vehicles 100A to 100C at the inspection device 400 delays, the server device 200 delays a period count by an amount of the arrival time delay.

According to the inspection system 10 of this embodiment described above, the adjustment of the inspection device 400 can be started at an appropriate timing without providing the first region RG1 and the second region RG2 as in the first embodiment and the second embodiment.

### D. Fourth Embodiment:

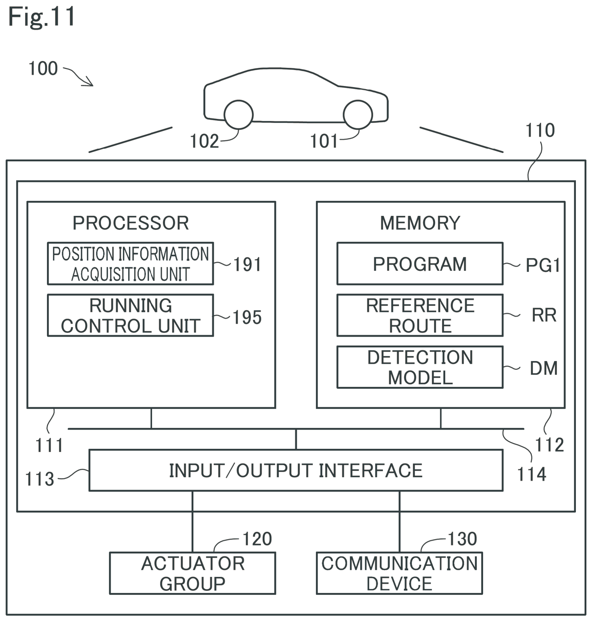

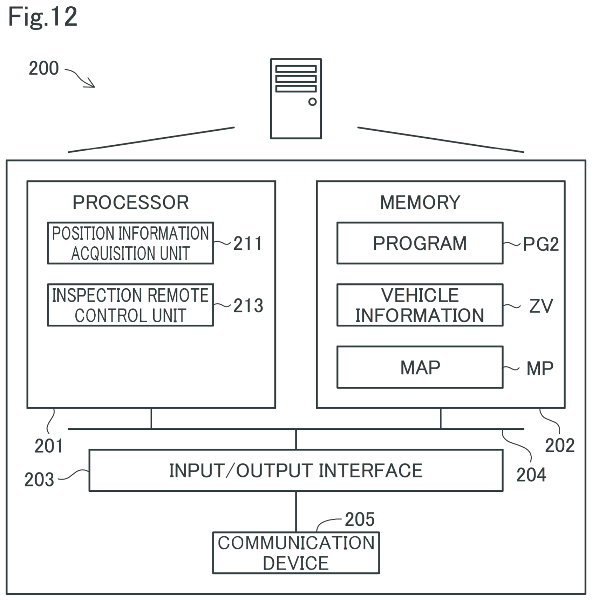

Fig. 11 is an explanatory diagram illustrating a configuration of the vehicle 100 included in the inspection system 10 of a fourth embodiment. Fig. 12 is an explanatory diagram illustrating a configuration of the server device 200 included in the inspection system 10 of the fourth embodiment. The inspection system 10 of the fourth embodiment is different from that of the first embodiment in that the vehicle 100 does not run by remote control from the server device 200 but runs by autonomous control of the vehicle 100. Other configurations are the same as those of the first embodiment unless otherwise stated.

As illustrated in Fig. 11, in this embodiment, the memory 112 of the vehicle control device 110 stores the reference route RR and a detection model DM in advance. The communication device 130 can communicate with another vehicle and the server device 200 by wireless communication. The processor 111 of the vehicle control device 110 executes the computer program PG1 stored in the memory 112 in advance, thus functioning as a position information acquisition unit 191 and the running control unit 195. The position information acquisition unit 191 uses a detection result of the external sensor 300 to acquire vehicle position information of the own vehicle. The running control unit 195 uses the vehicle position information of the own vehicle to generate the running control signal by itself, and causes the vehicle 100 to run.

As illustrated in Fig. 12, in this embodiment, the processor 201 of the server device 200 executes the computer program PG2 stored in the memory 202 in advance, thus functioning as the position information acquisition unit 211 and the inspection remote control unit 213. In this embodiment, the position information acquisition unit 211 acquires the vehicle position information from the vehicle 100. The inspection remote control unit 213 remotely controls the inspection device 400. Note that in this embodiment the server device 200 does not include the vehicle remote control unit 212 illustrated in Fig. 3. The memory 202 does not store the reference route RR and the detection model DM illustrated in Fig. 3.

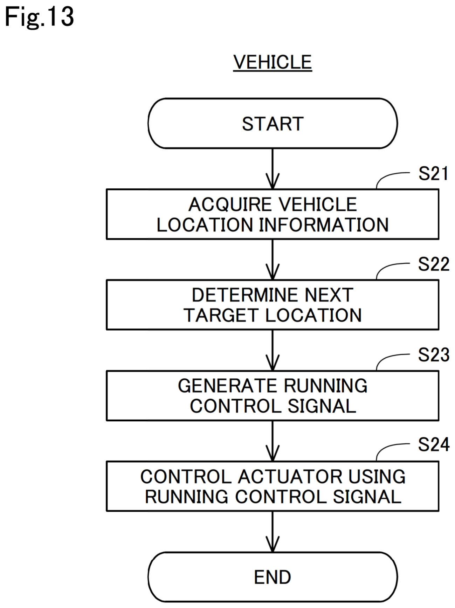

Fig. 13 is a flowchart showing a processing procedure for running control of the vehicle 100 in the second embodiment. In step S21, the processor 111 of the vehicle control device 110 acquires vehicle location information using detection result output from the camera as the external sensor 300. In step S22, the processor 111 determines a target location to which the vehicle 100 is to move next. In step S23, the processor 111 generates a running control signal for causing the vehicle 100 to run to the determined target location. In step S24, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator group 120 in a predetermined cycle. According to the inspection system 10 in the present embodiment, it is possible to cause the vehicle 100 to run by autonomous control without controlling the vehicle 100 remotely using the server device 200.

In this embodiment, the respective vehicles 100 determine an order of their entry to the inspection device 400 based on a predetermined rule by an inter-vehicle communication by using the communication device 130. For example, the respective vehicles 100 determine the order of their entry to the inspection device 400 base on a rule, such as an order of distance between each vehicle 100 and the inspection device 400 from the closest, or an order of a shipping timing of each vehicle 100 from the earliest. Each vehicle 100 transmits the determination result of the entry order to the server device 200. Each vehicle 100 enters the inspection device 400 in accordance with the determination result of the entry order.

At Step S110 of the operation control illustrated in Fig. 7, the server device 200 acquires the determination result of the entry order from each vehicle 100 and identifies the target vehicle based on the determination result of the entry order. At Step S120 of the operation control illustrated in Fig. 7, the server device 200 determines whether the preparation start condition is satisfied. In this embodiment, the preparation start condition includes that the target vehicle has entered the first region RG1 as in the first embodiment. The server device 200 can use the vehicle position information acquired from the target vehicle and the map MP stored in the memory 202 in advance to determine whether the target vehicle has entered the first region RG1. Note that the preparation start condition may include that the preceding vehicle has entered the second region RG2 as in the second embodiment. In this case, the server device 200 can use the vehicle position information acquired from the preceding vehicle and the map MP stored in the memory 202 in advance to determine whether the preceding vehicle has entered the second region RG2. Further, the preparation start condition may be similar to that of the third embodiment.

According to the inspection system 10 of this embodiment described above, each vehicle 100 can be caused to run to the inspection device 400 without remote control of the vehicle 100 by the server device 200. Moreover, in this embodiment, the adjustment of the inspection device 400 in accordance with the length of the wheelbase of the target vehicle can be started at an appropriate timing.

### E. Fifth Embodiment:

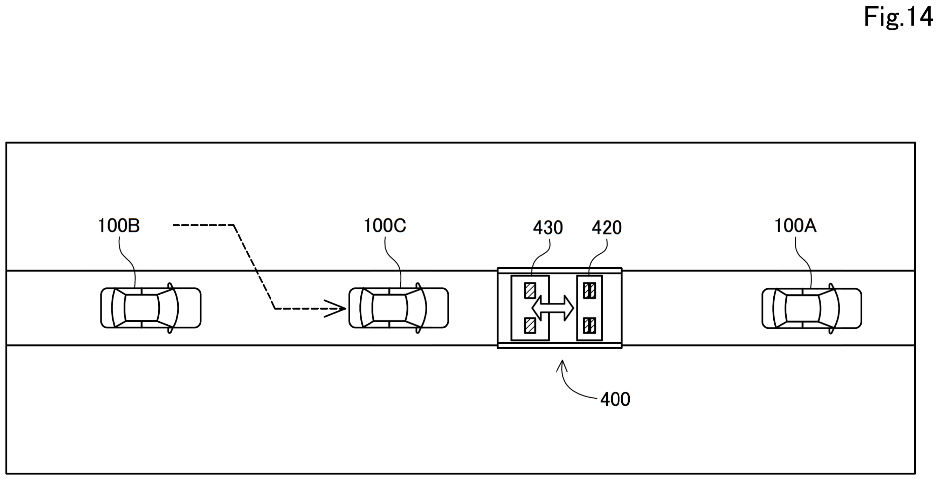

Fig. 14 is an explanatory diagram illustrating the inspection device 400 being adjusted in the inspection system 10 of a fifth embodiment. The fifth embodiment is different from the fourth embodiment in that the server device 200 starts over the operation control illustrated in Fig. 7 from Step S110 when the target vehicle is changed before a start of inspection of the target vehicle by the inspection device 400 after the identification of the target vehicle. Other configurations are the same as those of the fourth embodiment unless otherwise stated.

As illustrated in Fig. 14, in this embodiment, the second vehicle 100B is determined to be inspected by the inspection device 400 next to the first vehicle 100A between the first vehicle 100A and the second vehicle 100B, and the determination result is transmitted to the server device 200. Then, when a third vehicle 100 C newly arises, the first vehicle 100A and the second vehicle 100B redetermine an order of inspection by the inspection device 400 in which the third vehicle 100C is included, and transmit the redetermination result to the server device 200. As a result of the redetermination, when the third vehicle 100C is determined to be inspected by the inspection device 400 next to the first vehicle 100A, and the second vehicle 100B is determined to be inspected by the inspection device 400 next to the third vehicle 100C, the server device 200 starts over the operation control illustrated in Fig. 7 from Step S110. Therefore, the inspection device 400 can be adjusted in accordance with the length of the wheelbase of the third vehicle 100C after the first vehicle 100A withdraws from the inspection device 400 and before the third vehicle 100C arrives at the inspection device 400.

According to the inspection system 10 of this embodiment described above, even when an order of inspection of each vehicle 100 by the inspection device 400 is changed, the inspection device 400 can appropriately be adjusted. Note that in the fifth embodiment the server device 200 may cause each of the vehicles 100A to 100C to run by remote control.

### F. Other Embodiments:

(F1) In each embodiment described above, the vehicle 100 runs to the inspection device 400 by unmanned driving. However, the vehicle 100 may run to the inspection device 400 by manned driving. Also in this case, occurrence of standby time of the vehicle 100 can be suppressed.

(F2) In each embodiment described above, the inspection device 400 includes the configuration in which the first support body 420 supports the front wheel 101 of the vehicle 100 and the second support body 430 supports the rear wheel of the vehicle 100, and the server device 200 adjusts the spacing between the first support body 420 and the second support body 430 in accordance with the length of the wheelbase of the vehicle 100. However, the inspection device 400 may include a configuration in which the first support body 420 supports a left wheel of the vehicle 100 and the second support body 430 supports a right wheel of the vehicle 100, and the server device 200 may adjust spacing between the first support body 420 and the second support body 430 in accordance spacing between the left wheel and the right wheel of the vehicle 100.

(F3) In each embodiment described above, the first support body 420 and the second support body 430 include the rollers 421 and 431, respectively, that are rotatable while supporting the vehicle 100. However, at least one of the first support body 420 and the second support body 430 may not include the roller 421 or the roller 431.

(F4) In the first embodiment, the memory 202 of the server device 200 stores the map MP indicating the range of the first region RG1 in advance, and the server device 200 uses the vehicle position information of the target vehicle and the map MP to determine whether the target vehicle has entered the first region RG1. However, the server device 200 may determine whether the target vehicle has entered the first region RG1 without using the map MP. For example, the server device 200 may determine that the target vehicle has entered the first region RG1 when X and Y coordinates indicated in the vehicle position information of the target vehicle exceed a predetermined threshold. In this case, the memory 202 may store the threshold in advance instead of the map MP. Alternatively, the server device 200 may detect that the target vehicle has entered the first region RG1 by using a sensor provided to a boundary to the first region RG1.

(F5) In the second embodiment, the memory 202 of the server device 200 stores the map MP indicating the range of the second region RG2 in advance, and the server device 200 uses the vehicle position information of the preceding vehicle and the map MP to determine whether the preceding vehicle has entered the second region RG2. However, the server device 200 may determine whether the preceding vehicle has entered the second region RG2 without using the map MP. For example, the server device 200 may determine that the preceding vehicle has entered the second region RG2 when X and Y coordinates indicated in the vehicle position information of the preceding vehicle exceed a predetermined threshold. In this case, the memory 202 may store the threshold in advance instead of the map MP. Alternatively, the server device 200 may detect that the preceding vehicle has entered the second region RG2 by using a sensor provided to a boundary to the second region RG2.

(F6) In each embodiment described above, the server device 200 may start the adjustment of the inspection device 400 in accordance with the length of the wheelbase of the target vehicle when the following preparation start condition is determined to be satisfied at Step S120 of the operation control illustrated in Fig. 7.
- The target vehicle has started to run toward the inspection device 400.
The target vehicle having started to run toward the inspection device 400 as used herein may be, for example, the target vehicle stopped at the first place PL1 having started to run toward the inspection device 400 at the second place PL2, or the target vehicle stopped between the first place PL1 and the second place PL2 having started to run toward the inspection device 400 at the second place PL2.

(F7) In each embodiment described above, the inspection system 10 includes the server device 200 and the inspection control device 450 as separate bodies. However, the inspection system 10 may include a device in which the server device 200 and the inspection control device 450 are integrated together. In this case, the device in which the server device 200 and the inspection control device 450 are integrated together corresponds to the control device of the present disclosure.

### G. Other Embodiments

(G1) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server device 200 and the vehicle 100 may acquire the vehicle location information through template matching using the three-dimensional point cloud data as the detection result and reference point cloud data, for example.

(G2) In the above-described first to third embodiments, the server device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server device 200 may acquire vehicle location information, determine a target location to which the vehicle 100 is to move next, and generate a route from a current location of the vehicle 100 indicated by the acquired vehicle location information to the target location. The server device 200 may generate a route to the target location between the current location and a destination or generate a route to the destination. The server device 200 may transmit the generated route to the vehicle 100. The vehicle 100 may generate a running control signal in such a manner as to cause the vehicle 100 to run along the route received from the server device 200 and control the actuator group 120 using the generated running control signal.
(2) The server device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(G3) In the above-described fourth to fifth embodiments, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(G4) In the above-described fourth to fifth embodiments, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 of the vehicle 100 using the generated running control signal. In this case, the vehicle 100 is capable of running without using any detection result from the external sensor 300. The vehicle 100 may acquire target arrival time or traffic congestion information from outside the vehicle 100 and reflect the target arrival time or traffic congestion information in at least one of the route and the running control signal.

(G5) In the above-described first to third embodiments, the server device 200 automatically generates a running control signal to be transmitted to the vehicle 100. By contrast, the server device 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server device 200 through wire communication or wireless communication, for example, and the server device 200 may generate a running control signal responsive to the operation on the operating device.

(G6) In each of the above-described embodiments, the vehicle 100 is simply required to have a configuration to become movable by unmanned driving. The vehicle 100 may embodied as a platform having the following configuration, for example. More specifically, in order to fulfill three functions including "run," "turn," and "stop" by unmanned driving, the vehicle 100 is simply required to include at least the vehicle control device 110 and the actuator group 120. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(G7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(G8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(G9) In each of the above embodiments, some or all of the functions and processes implemented by software may be implemented by hardware. Also, some or all of the functions and processes implemented by hardware may be implemented by software. As hardware for implementing the various functions in each of the above embodiments, various circuits such as integrated circuits and discrete circuits may be used.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. An inspection system (10) comprising:
an inspection device (400) configured to inspect a vehicle (100), wherein the inspection device has a first support body (420), a second support body (430) and an actuator (440), wherein the first support body is configured to support a first wheel (101) of the vehicle, wherein the second support body is configured to support a second wheel (102) of the vehicle, wherein the actuator is configured to change support body spacing (Ls) between the first support body and the second support body; and
a control device (200) configured to control the actuator, wherein the control device is configured to acquire wheel spacing (Lw) between the first wheel and the second wheel and adjust the support body spacing in accordance with the wheel spacing before the vehicle arrives at the inspection device.

2. The inspection system according to claim 1,
wherein the control device is configured to cause the vehicle to run to the inspection device by unmanned driving.

3. The inspection system according to claim 1,
wherein the first support body comprises a first roller (421) rotatable while the first roller supports the first wheel, and
wherein the second support body comprises a second roller (431) rotatable while the second roller supports the second wheel.

4. The inspection system according to claim 1,
wherein the control device is configured to adjust the support body spacing when the vehicle enters a predetermined first region (RG1) before the vehicle arrives at the inspection device.

5. The inspection system according to claim 1,
wherein the control device is configured to adjust the support body spacing when the vehicle starts to run toward the inspection device.

6. The inspection system according to claim 1,
wherein the inspection device is configured to inspect a plurality of vehicles in order at a predetermined period, and
wherein the control device is configured to adjust the support body spacing at a timing in accordance with the period.

7. The inspection system according to claim 1,
wherein the inspection device is configured to inspect a plurality of vehicles in order, and
wherein the control device is configured to:
identify among the plurality of vehicles a preceding vehicle that is inspected by the inspection device first, and a target vehicle that is inspected by the inspection device next to the preceding vehicle, and
adjust the support body spacing in accordance with the wheel spacing of the target vehicle after the preceding vehicle withdraws from the inspection device and before the target vehicle arrives at the inspection device.

8. The inspection system according to claim 7,
wherein the control device is configured to adjust the support body spacing in accordance with the wheel spacing of the target vehicle when the preceding vehicle enters a predetermined second region (RG2) outside of the inspection device.

9. The inspection system according to claim 7,
wherein, when a third vehicle to be inspected by the inspection device between inspection of the preceding vehicle and inspection of the target vehicle arises after the preceding vehicle and the target vehicle are identified, the control device is configured to adjust the support body spacing in accordance with the wheel spacing of the third vehicle after the preceding vehicle withdraws from the inspection device and before the third vehicle arrives at the inspection device.

10. A control device (200) comprising:
a storage unit (202) configured to store wheel spacing (Lw) between a first wheel (101) and a second wheel (102) of a vehicle (100); and
a control unit (201) configured to control an inspection device (400), wherein the inspection device has a first support body (420), a second support body (430) and an actuator (440), wherein the first support body is configured to support the first wheel of the vehicle, wherein the second support body is configured to support the second wheel of the vehicle, wherein the actuator is configured to change support body spacing (Ls) between the first support body and the second support body, wherein the control unit is configured to adjust the support body spacing in accordance with the wheel spacing before the vehicle arrives at the inspection device.

11. An inspection method comprising:
inspecting a vehicle (100) by using an inspection device (400), wherein the inspection device has a first support body (420) and a second support body (430), wherein the first support body is configured to support a first wheel (101) of the vehicle, wherein the second support body is configured to support a second wheel (102) of the vehicle; and
preparation of the inspecting, wherein the preparation includes acquiring wheel spacing (Lw) between the first wheel and the second wheel and adjusting support body spacing (Ls) between the first support body and the second support body in accordance with the wheel spacing before the vehicle arrives at the inspection device.
